(19) Europäisches Patentamt
European Patent Office
Office européen des brevets

(11) **EP 3 640 006 A1**

(12) **EUROPEAN PATENT APPLICATION**
published in accordance with Art. 153(4) EPC

(43) Date of publication:
**22.04.2020 Bulletin 2020/17**

(21) Application number: **17913141.2**

(22) Date of filing: **16.06.2017**

(51) Int Cl.:
**B29C 64/153** (2017.01)　　**B22F 3/105** (2006.01)

(86) International application number:
**PCT/JP2017/022401**

(87) International publication number:
**WO 2018/229990 (20.12.2018 Gazette 2018/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Aspect Inc.**
**Inagi-shi, Tokyo 206-0803 (JP)**

(72) Inventors:
• **KOSHIMIZU, Hidekazu**
**Inagi-shi,**
**Tokyo 2060803 (JP)**

• **HORIBA, Yoshinori**
**Inagi-shi,**
**Tokyo 2060803 (JP)**
• **CHARLES HENRI, Phi Ky Phong**
**Inagi-shi,**
**Tokyo 2060803 (JP)**

(74) Representative: **SSM Sandmair**
**Patentanwälte Rechtsanwalt**
**Partnerschaft mbB**
**Joseph-Wild-Straße 20**
**81829 München (DE)**

(54) **POWDER BED MELT BONDING DEVICE**

(57)　　Provided is a powder bed fusion apparatus capable of performing proper temperature control of a modeling region with a heater based on temperatures measured by temperature sensors. A powder bed fusion apparatus (100) for fabricating a model by applying an energy beam to a thin layer (29a) of a powder material to thereby melt the thin layer, solidifying the thin layer to thereby form a bonded layer, and laminating a plurality of the bonded layers, comprises: an energy beam emission device (32) that applies the energy beam to a surface of the thin layer (29a); infrared heaters (31) that are provided above the thin layer (29a) and heat the thin layer (29a); a first temperature sensor (33a) that measures a first temperature of the surface of the thin layer 29a; a second temperature sensor (33b) that measures a second temperature of a surface of the thin layer to which the energy beam is not applied; and an infrared heater heating control circuit that switches to control based on the second temperature sensor (33b) upon detection of an abnormal temperature rise during control based on the first temperature sensor (33a), and outputs a data signal on adjusted power to be supplied to the infrared heaters (31).

FIG.1

EP 3 640 006 A1

**Description**

[Technical FIELD]

The present invention relates to a powder bed fusion apparatus.

[BACKGROUND Art]

In recent years, for fabricating prototypes, high-mix low-volume products, and so on, various powder bed fusion methods of fabricating an object's model have been drawing attention which involve sequentially laminating solidified layers each corresponding to the shape of a thin layer which would be obtained by slicing the object (slice data).
In one powder bed fusion method, a carrying member carries a powder material into a modeling container while planarizing its surface to thereby form a thin layer of the powder material on a lifting table.
Then, based on slice data, a particular region in the thin layer of the powder material is selectively heated with an energy beam to be sintered or melted and then solidified to thereby form a bonded layer.
Subsequently, the above operations are repeated while lowering the lifting table to laminate several hundred to several thousand bonded layers to fabricate a three-dimensional model.
Such a method is performed using a dedicated powder bed fusion apparatus.

[CITATION LIST]

[Patent Literatures]

Patent Literature 1: Japanese Patent Laid-open No. 2017-013426
Patent Literature 2: Japanese Patent Laid-open No. 2016-107554
Patent Literature 3: Japanese Patent Laid-open No. 2008-370024
Patent Literature 4: Japanese Patent Laid-open No. 2007-223192

[SUMMARY OF INVENTION]

[Technical Problems]

Meanwhile, after the particular region in the thin layer of the powder material is melted, the melted powder material is solidified. If there is a temperature difference between the melted region and the region around it at the time of the solidification, the solidified layer warps or shrinks. The larger the temperature difference, the larger the warpage or the shrinkage, thereby making it impossible to obtain a model with the desired shape and dimensions.
To address this, for example, a heater is provided around the modeling container and an infrared heater is disposed above the modeling container to preheat the powder material in the modeling container and the thin layer of the powder material at the front plane of the modeling container such that the temperature of at least the uppermost thin layer of the powder material can be close to the melting temperature of the powder material before the application of the energy beam.
Further, the temperature of the thin layer of the powder material in a modeling region is measured with an infrared temperature sensor and a control device adjusts the heating by the heaters based on the measured temperature when necessary.
However, the temperature measurement region in the thin layer temporarily becomes hot in the case where the energy beam is applied to the temperature measurement region in the thin layer and also in the case where thin layers irradiated with the laser beam have been piled under the thin layer. Consequently, the control device erroneously recognizes that the entire modeling region has become hot although the temperature of the region around the application region is actually low. This leads to a problem of not properly adjusting the heating by the infrared heater.
Meanwhile, to solve this problem, one may consider, when the laser beam is applied to the temperature measurement region, fixing the power to be supplied to the infrared heater to the power immediately before the application of the laser beam to thereby prevent the temperature from dropping. However, this leads to further problems, as described below.
Specifically, the problems are that the temperature is not measured after the application of the laser beam, so that precise temperature control cannot be performed for the modeling region, that in the case where the thin layers under that thin layer have been irradiated with the laser beam, heat has been accumulated under the thin layer, so that the accurate temperature cannot be figured out even if the measurement is started again after the end of the application of the laser beam, and so on.

The present invention has been made in view of the above problems and provides a powder bed fusion apparatus capable of performing proper temperature control of a modeling region with a heater based on temperatures measured by temperature sensors.

[Solution to Problems]

To solve the above problems, an aspect provides a powder bed fusion apparatus for fabricating a model by applying an energy beam to a thin layer of a powder material to thereby melt the thin layer, solidifying the thin layer to thereby form a bonded layer, and laminating a plurality of the bonded layers, comprises: an energy beam emission device that applies the energy beam to a surface of the thin layer; an infrared heater that is provided above the thin layer and heats the thin layer; a first temperature sensor that measures a first temperature of the surface of the thin layer; a second temperature sensor that measures a second temperature of a surface of a region in the thin layer to which the energy beam is not applied; and an infrared heater heating control circuit that switches to control based on the second temperature sensor upon detection of an abnormal temperature rise during control based on the first temperature sensor, and outputs a data signal on adjusted power to be supplied to the infrared heater.

[Advantageous Effect of Invention]

According to the present invention, the powder bed fusion apparatus comprises: the infrared heater; the first temperature sensor, which measures the first temperature of a surface of a thin layer; the second temperature sensor, which measures the second temperature of a surface of the thin layer to which an energy beam is not applied; and the infrared heater heating control circuit, which switches to the control based on the second temperature sensor upon detection of an abnormal temperature rise during the control based on the first temperature sensor, and outputs a data signal on adjusted power to be supplied to the infrared heater.

Thus, when a laser beam is applied to the temperature measurement region during the control based on the first temperature sensor, the infrared heater heating control circuit detects an abnormal temperature rise and thus switches from the control based on the first temperature sensor to the control based on the second temperature sensor and outputs a data signal on adjusted power to be supplied to the infrared heater. Hence, proper temperature control is performed.

As a result, a model is obtained with warpage and shrinkage suppressed. Accordingly, the accuracy of the model is improved.

[BRIEF DESCRIPTION OF DRAWINGS]

FIG. 1 is a perspective view illustrating a powder bed fusion apparatus according an embodiment of the present invention.

FIG. 2A is a transparent top view illustrating the relative arrangement of components of the powder bed fusion apparatus in FIG. 1, and FIG. 2B is a cross-sectional view along line I-I in FIG. 2A.

FIG. 3 is a perspective view illustrating the relative arrangement of the surface of a thin layer of a powder material formed in a modeling container, a laser beam emission device, infrared temperature sensors in the powder bed fusion apparatus in FIG. 1.

FIG. 4 relates to a study on the present invention, and is a graph illustrating the result of a time-series study on temperature measured by an infrared temperature sensor with a laser beam applied and on the derivative of the measured temperature.

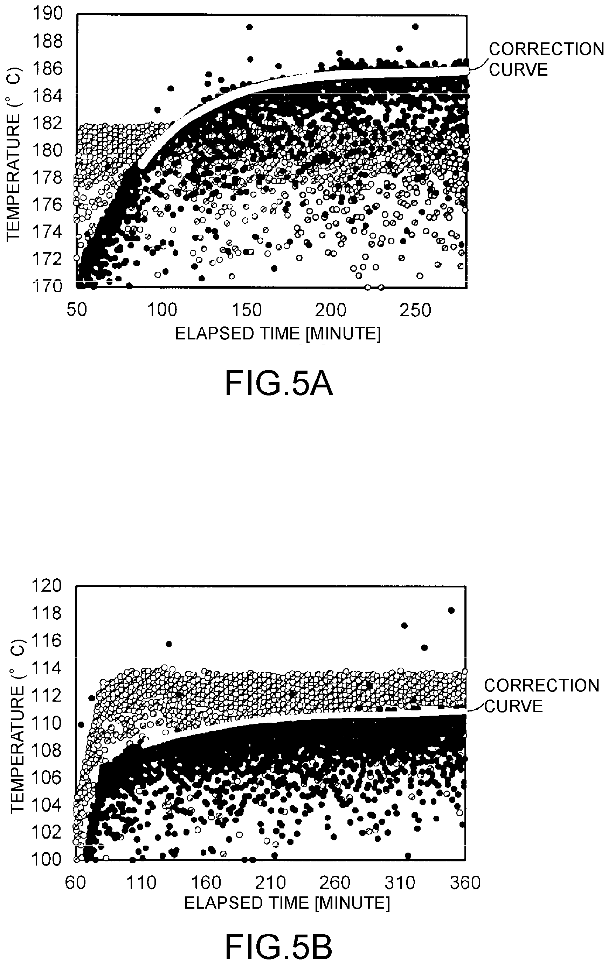

FIG. 5 relates to a study on the present invention, and FIG. 5A is a graph for a high-melting point powder material plotting the temperature distribution (○) in a center portion of a modeling region along elapsed time and the temperature distribution (●) in a region around the modeling region along the elapsed time under power control without application of a laser beam, while FIG. 5B is a graph for a low-melting point powder material plotting the temperature distribution (○) in a center portion of a modeling region along elapsed time and the temperature distribution (●) in a region around the modeling region along the elapsed time under power control without application of a laser beam.

FIG. 6 relates to a study on the present invention, and is a graph illustrating a time-series change in temperature of a temperature measurement region as a result of applying a laser beam to the temperature measurement region for a plurality of thin layers, stopping the application, and then newly laminating thin layers.

FIG. 7 is a block diagram illustrating the configuration of a control device that controls the powder bed fusion apparatus according the embodiment of the present invention.

FIG. 8 is a block diagram illustrating the configuration of an infrared heater heating control circuit in the control device in FIG. 7.

FIG. 9 is a flowchart through which the infrared heater heating control circuit in FIG. 8 performs heating control.

FIG. 10 is a flowchart through which the control device in FIG. 7 performs powder bed fusion.

FIG. 11 is a set of cross-sectional views explaining a powder bed fusion method using the powder bed fusion apparatus in FIGS. 1 to 3 (part 1).

FIG. 12 is a set of cross-sectional views explaining the powder bed fusion method using the powder bed fusion apparatus in FIGS. 1 to 3 (part 2).

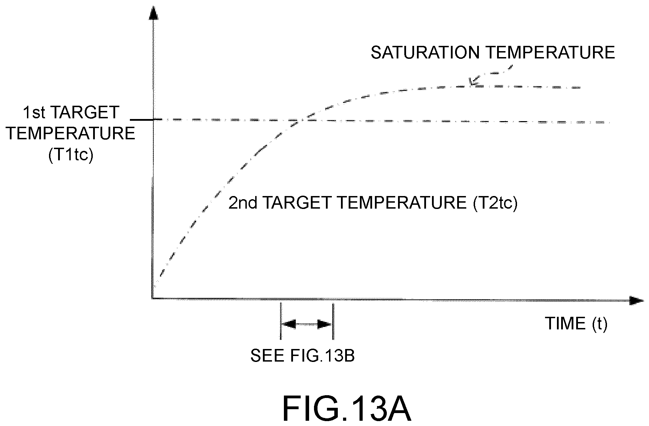

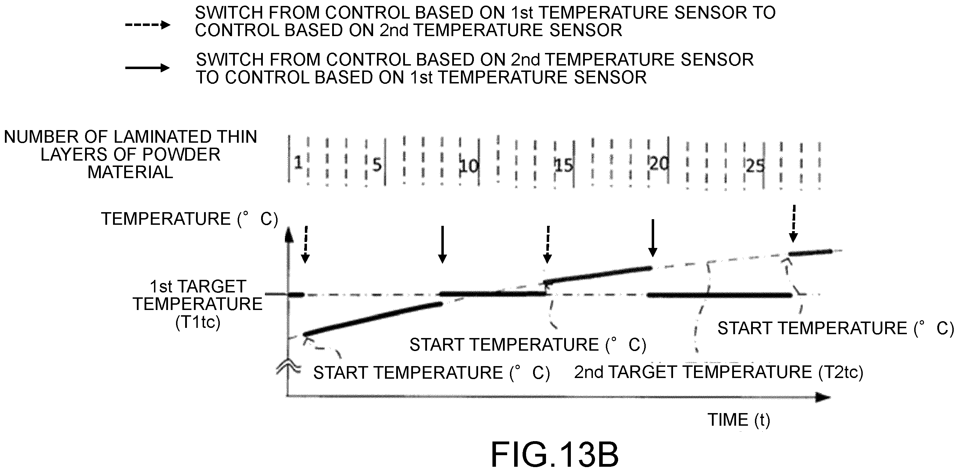

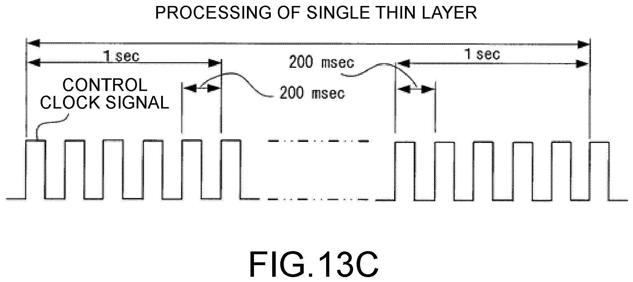

FIG. 13A is a graph illustrating time-series changes in a first target temperature and a second target temperature according to the embodiment of the present invention, FIG. 13B is a graph illustrating an enlarged version of the time range "SEE FIG.13B" in FIG. 13A , illustrating an example of the powder bed fusion method in which a plurality of thin layers are processed based on the first target temperature and the second target temperature illustrated in FIG. 13A, and FIG. 13C is a timing chart illustrating the relation between a cycle for processing a single thin layer and a cycle for performing control based on an infrared temperature sensor.

FIG. 14A and 14B are top views illustrating processing of a plurality of thin layers according to the embodiment of the present invention.

FIG. 15A is a graph corresponding to FIG. 14B and illustrating a time-series change in the surface temperature of thin layers in the modeling region measured by an infrared temperature sensor with the infrared heater power control in FIG. 9 performed in the powder bed fusion apparatus in FIG. 1, while FIG. 15B is a graph illustrating a time-series change in adjusted power outputted to the infrared heaters according the temperature change in FIG. 15A.

FIG. 16 is a perspective view illustrating the arrangement of the surface of a thin layer of a powder material formed in a modeling unit, a laser beam emission device, and an infrared temperature sensor in a powder bed fusion apparatus according to a comparative example.

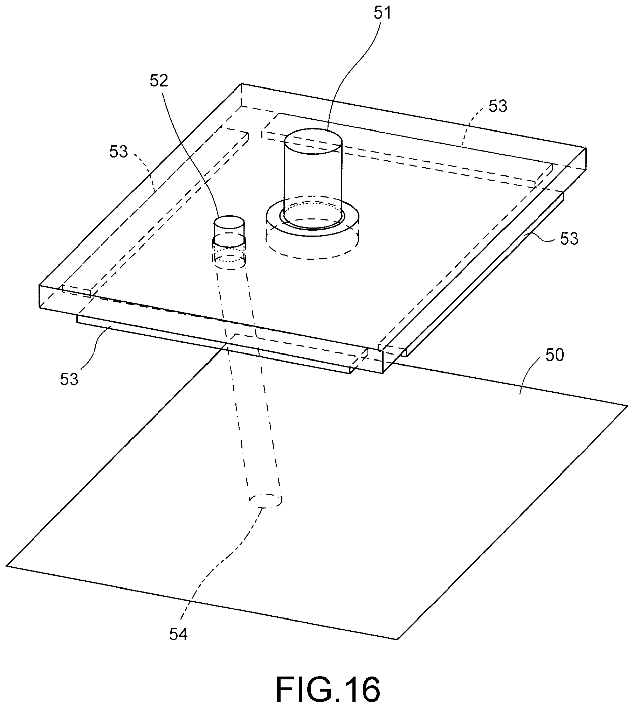

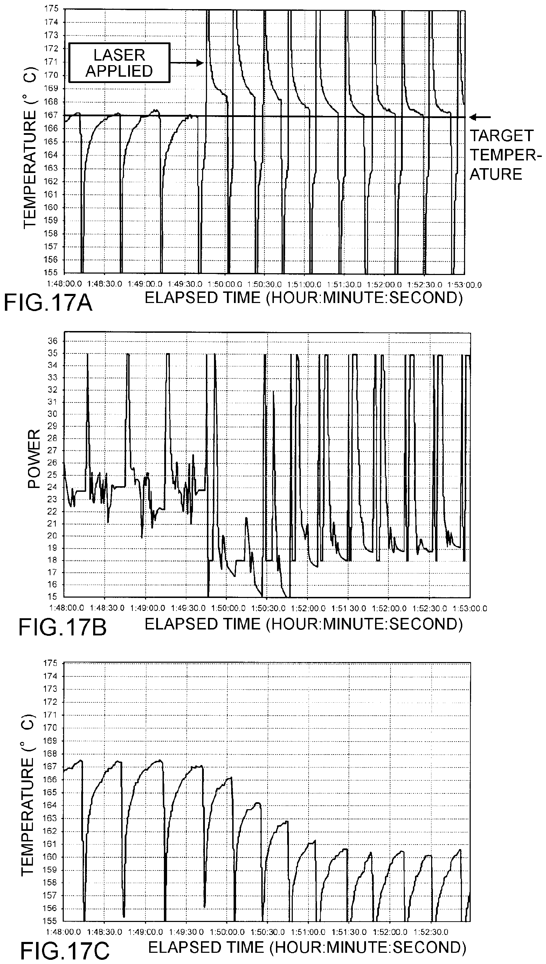

FIG. 17A relates to the comparative example and is a graph illustrating a time-series change in the surface temperature of thin layers measured in the powder bed fusion apparatus in FIG. 16 by the infrared temperature sensor under infrared heater power control with a laser beam applied to a temperature measurement region, FIG. 17B is a graph illustrating a time-series change in adjusted power outputted to the infrared heaters according the temperature change in FIG. 17A, and FIG. 17C is a graph illustrating a time-series change in the surface temperature of thin layers measured along with FIG. 17A with another infrared temperature sensor for which a temperature measurement region other than the laser beam application region is set in a modeling region.

[DESCRIPTION OF EMBODIMENT]

An embodiment of the present invention will be described below with reference to the drawings.

(Embodiment)

(1) Description of Powder Bed Fusion Apparatus According to Embodiment of The Present Invention

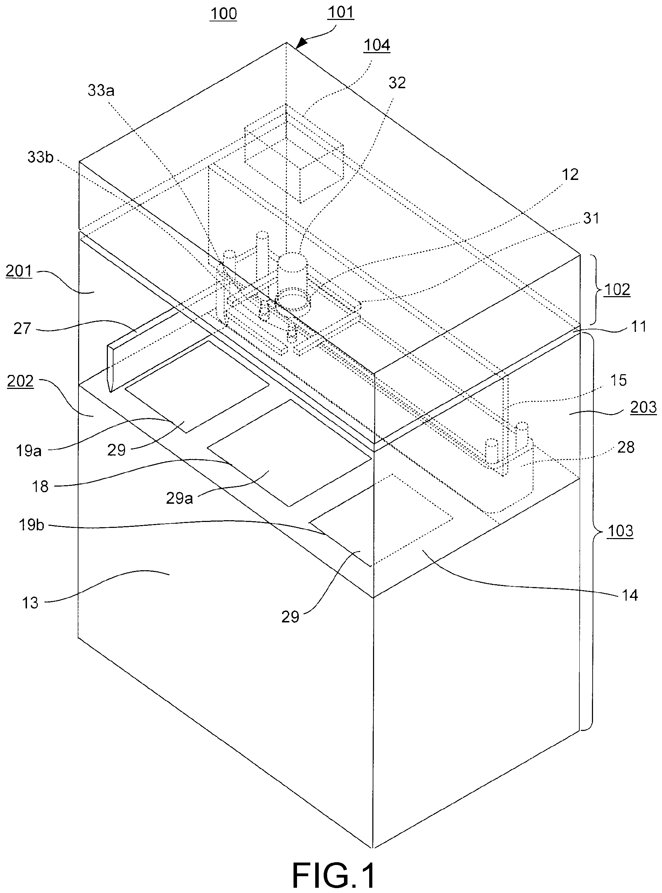

A powder bed fusion apparatus according to an embodiment of the present invention will be described with reference to FIGS. 1 to 8.

In FIGS. 1 to 3, portions seen through others are illustrated with dotted lines in order to facilitate understanding of the apparatus configuration.

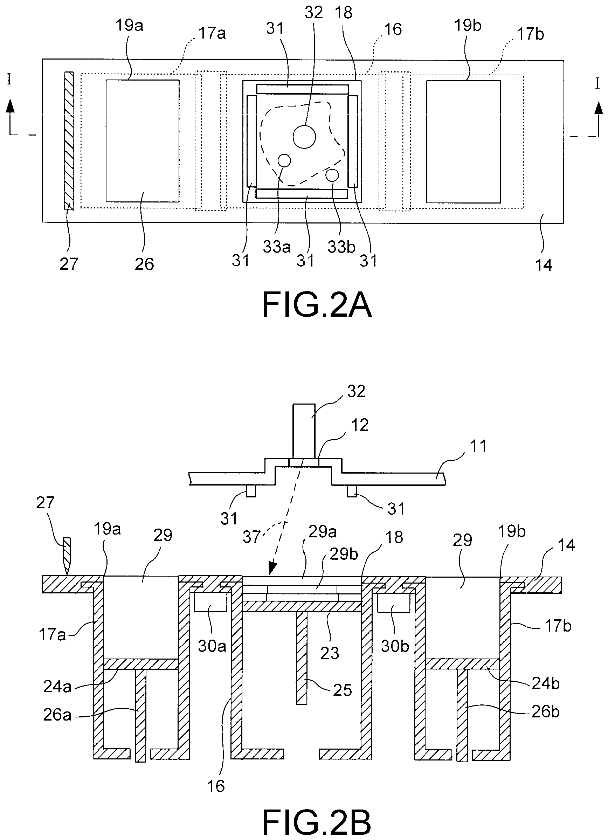

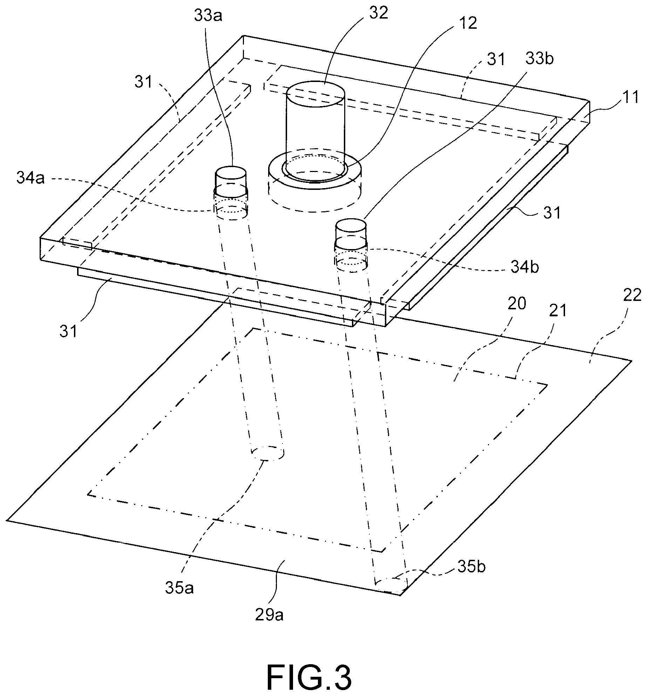

In a powder bed fusion apparatus 100 according to this embodiment, as illustrated in FIGS. 1 and 2, a housing chamber 102 for a laser beam emission device and infrared temperature sensors and a modeling chamber 103 are disposed in an upper side and a lower side of a chamber 101, respectively, with a partition 11 interposed therebetween. Further, as illustrated in FIG. 3, a laser window 12 that transmits laser beams is fitted in the partition 11. Furthermore, a control device 104 is provided which is installed in the housing chamber 102 in the chamber 101. Note that, though not illustrated in FIG. 1, the control device 104 is coupled to control targets to be described later by cables through which electrical signals are conducted.

Next, detailed configurations of the modeling chamber 103, the housing chamber 102, and the control device 104 will be described in this order.

(i) Configuration of Modeling Chamber 103

As illustrated in FIG. 1, the modeling chamber 103 includes a modeling part 201 disposed on an upper near side, a container housing part 202 disposed under the modeling part 201, and a recoater driving part 203 disposed behind the modeling part 201.

The modeling part 201 is separated from outside by a partition of the chamber 101. In particular, a partition not illustrated separates the front side of the modeling part 201 and comprises a mechanism like a door that can be opened to and closed from outside.

The container housing part 202 is also separated from outside by a partition of the chamber 101. A partition 13 separates the front side of the container housing part 202 and comprises a mechanism like a door that can be opened to and closed from outside, like the partition for the modeling part 201.

Further, a partition 14 separates the modeling part 201 and the container housing part 202, and the partition 14 serves also as a platform for the modeling part 201. Also, a partition 15 separates the modeling part 201 and the recoater driving part 203.

As illustrated in FIGS. 2A and 2B, the container housing part 202 houses a modeling container 16 and first and second powder material storage containers 17a and 17b. The first powder material storage container 17a, the modeling container 16, and the second powder material storage container 17b are disposed in this order from the left as viewed from the front side of the apparatus.

By opening and closing the partition 13, these containers 17a, 16, and 17b can be put into the container housing part 202 from outside and taken out of the container housing part 202.

In the platform 14, first to third opening portions 19a, 18, and 19b having the same sizes as quadrangular opening end planes of the containers 17a, 16, and 17b are provided in an order corresponding to the order in which the containers 17a, 16, and 17b are arranged.

A region situated inside the opening end plane of the modeling container 16 from its outer edge by predetermined distances is a modeling region to which a laser beam can be applied. In this embodiment, as illustrated in FIG. 3, a modeling region 20 has a quadrangular shape, and its outer edge 21 is indicated by the dashed and double-dotted line. Also, the region around the outer periphery of the modeling region 20 is a region (non-application region) 22 to which the laser beam is not applied.

The containers 17a, 16, and 17b are attached to the platform 14 by inserting the upper edges of the containers 17a, 16, and 17b into grooves provided in edges in the platform 14 along the peripheries of the first to third opening portions 19a, 18, and 19b from the near side of the platform 14. The containers 17a, 16, and 17b can be detached from the platform 14 by doing the reverse of the above.

Also, as illustrated in FIG. 2B, inside the first powder material storage container 17a, the modeling container 16, and the second powder material storage container 17b, first to third lifting tables 24a, 23, and 24b are installed which serve also as the bottoms of the containers 17a, 16, and 17b, respectively. The first to third lifting tables 24a, 23, and 24b are coupled to support shafts 26a, 25, and 26b linked to a driving device not illustrated and are capable of moving up and down inside the containers 17a, 16, and 17b, respectively. Also, the modeling part 201 includes a recoater (carrying member) 27 that moves on the upper surface of the platform 14 to carry a powder material. The entire upper surface of the platform 14 is flush. This enables the blade-type recoater 27 to move across the entire upper surface of the platform 14. The same applies to when a roller-type recoater is used.

Though not partly illustrated, the recoater driving part 203 comprises a driving mechanism that holds one end of the recoater 27 and translates the recoater 27 in the left-right direction with a motor.

In addition to that driving mechanism, an endless belt 28 separating the modeling part 201 and the recoater driving part 203 is further provided. The endless belt 28 is disposed with its one belt surface facing the modeling part 201 and moves in the left-right direction along with the recoater 27. Thus, the endless belt 28 functions as a partition separating the modeling part 201 and the recoater driving part 203 with the partition 15.

With the above configuration, the recoater 27 is moved rightward across the first opening portion 19a to take a powder material 29 from the first powder material storage container 17a, across the second opening portion 18 to carry the taken powder material 29 into the modeling container 16 and form a thin layer 29a of the powder material, and across the third opening portion 19b to put the powder material 29 remaining after the formation of the thin layer 29a into the second powder material storage container 17b.

Also, the recoater 27 is moved leftward across the third opening portion 19b to take the powder material 29 from the second powder material storage container 17b, across the second opening portion 18 to carry the taken powder material 29 into the modeling container 16 and form a thin layer 29a of the powder material, and across the first opening portion 19a to put the powder material 29 remaining after the formation of the thin layer 29a into the first powder material storage container 17a.

During the above, in the first or second powder material storage container 17a or 17b on the supply side, the first or third lifting table 24a or 24b is raised with the powder material 29 placed thereon to supply the powder material 29. In the second or first powder material storage container 17b or 17a on the reception side, the third or first lifting table 24b or 24a is lowered to receive the powder material 29 remaining after the formation of the thin layer 29a on the third or first lifting table 24b or 24a.

In the modeling container 16, each time a thin layer 29a of the powder material is formed, the thin layer 29a is melted with the energy beam and solidified to form a bonded layer 29b. Further, each time a bonded layer 29b is formed, the second lifting table 23 is lowered and a new bonded layer 29b is subsequently laminated. As a result, a necessary number of bonded layers 29b are laminated, so that a model is produced. Further, in the embodiment of the present invention, the modeling container 16 includes heaters in partitions for the container and the second lifting table 23 in order to preheat the powder material 29 and its thin layer 29a to near the melting temperature of the powder material 29 before the application of the laser beam.

Also, heaters and infrared heaters 31 are disposed around the containers 16, 17a, and 17b. Among the heaters around the containers 16, 17a, and 17b, heaters 30a and 30b are disposed under the platform 14 between the powder material storage containers 17a and 17b on both sides of the modeling container 16. Though not illustrated, the other heaters are provided around the outer walls of the containers 16, 17a, and 17b. As illustrated in FIGS. 2 and 3, four infrared heaters 31 are disposed near the partition 11 at the top of the modeling part 201 for the four sides surrounding the modeling region 20.

In particular, in the present invention, the infrared heaters 31 are operated to maintain the surface temperature of the thin layer 29a at a target temperature by constantly adjusting power supplied to the infrared heater 31. The power supplied to the four infrared heaters 31 is adjusted by a control device to be described later. In this embodiment, the power supplied to the other heaters is fixed, but the supplied power may be adjusted if necessary, like the power for the infrared heaters 31.

(ii) Configuration of Housing Chamber 102 for Laser beam Emission Device (Energy Beam Emission Device) and Infrared Temperature Sensor

As illustrated in FIG. 1, FIG. 2A, and FIG. 3, the housing chamber 102 is provided above the modeling chamber 103 with the partition 11 interposed therebetween, and houses a laser beam emission device 32 and two infrared temperature sensors 33a and 33b.

For the laser beam, a carbon dioxide laser, a YAG laser, an excimer laser, a He-Cd laser, a diode-pumped solid-state laser, and so on can be used. Also, besides a laser beam, an energetic particle beam such as an electron beam can be used as the energy beam, and an energy beam emission device 32 designed for such is used.

The laser beam emission device 32 includes a laser beam source, beam scanning means, and an optical system such as a lens.

Also, in this embodiment, the laser window 12, which is fitted in the partition 11, is made of a special disc-shaped glass capable of transmitting laser beams and is disposed above a center portion of the modeling region.

A laser beam emitted from the laser beam source travels through the beam scanning means and the optical system, such as a lens, and passes through the laser window 12 to be emitted into the modeling part 201 and applied to the thin layer 29a of the powder material in the modeling container 16.

The two infrared temperature sensors 33a and 33b measure a temperature in the modeling region 20 (first temperature) and a temperature in the region 22 around the outer periphery of the modeling region (second temperature) through sensor windows 34a and 34b fitted in the partition 11. The one that measures the temperature in the modeling region 20 is the first temperature sensor 33a while the one that measures the temperature in the region 22 around the outer periphery of the modeling region is the second temperature sensor 33b. The first temperature sensor 33a is disposed near the laser beam emission device 32 while the second temperature sensor 33b is disposed near a space above the region 22 around the modeling region. In the regions 20 and 22, temperature measurement regions 35a and 35b and target temperatures are set, respectively. The control device 104 adjusts the power to be supplied to the four infrared heaters 31 based on temperature information measured by one of the first temperature sensor 33a and the second temperature sensor 33b so as to bring the temperature of the corresponding temperature measurement region 35a or 35b to the corresponding target temperature. The configuration of the control device 104 will be described later.

A study was carried out on the temperature control in the embodiment of the present invention. The study will be described next before describing the control device 104.

(iii) Study on the Present Invention

(a) How to Handle Case Where Laser Beam Is Applied to Temperature Measurement Region 35a

The auxiliary infrared temperature sensor (second temperature sensor) 33b is additionally provided, which measures the temperature in the region 22 other than the modeling region 20, which is in the thin layer 29a of the powder material but not at all likely to be irradiated with the energy beam. Further, the present inventor conceived of switching from power control based on the temperature measured by the main infrared temperature sensor (first temperature sensor) 33a (hereinafter referred to as the control based on the first temperature sensor) to power control based on the temperature measured by the auxiliary infrared temperature sensor 33b (hereinafter referred to as the control based on the second temperature sensor) when the laser beam is applied to the temperature measurement region 35a for the main infrared temperature sensor 33a in the modeling region 20.

Meanwhile, normally, the region 22 around the modeling region is not at all likely to be irradiated with the energy beam. The region 22 is within the thin layer 29a but is located at its periphery. Thus, it has been empirically found that the temperature in the region is significantly different from the temperature of a center portion of the modeling region 20.

This led the present inventor to conceive of figuring out the correlation between the temperature in the region 22 around the modeling region and the temperature of the center portion of the modeling region 20 and controlling the temperature of the center portion of the modeling region 20 based on the temperature in the region 22 around the modeling region.

In other words, it was necessary to figure out how the temperature in the region 22 around the modeling region would be changed with time by adjusted power supplied to the infrared heaters 31 to maintain the temperature of the center portion of the modeling region 20 within a target temperature range.

First, the present inventor studied a method of detecting application of a laser beam to the temperature measurement region 35a for the first temperature sensor 33a.

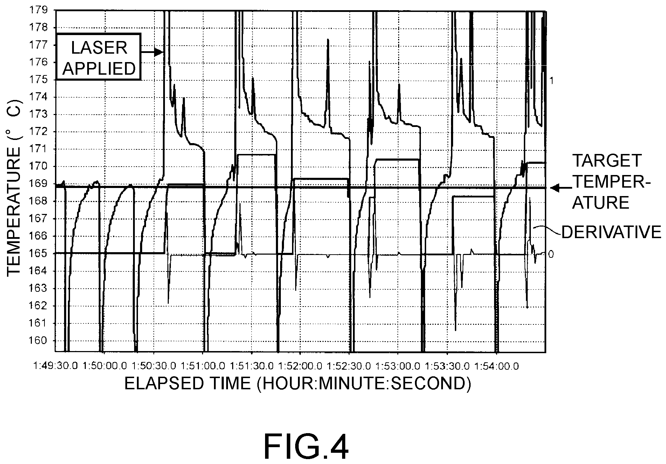

FIG. 4 is a graph obtained by studying time-series changes in the temperature measured by the first temperature sensor 33a and the derivative of the measured temperature with a laser beam applied to the temperature measurement region 35a for the first temperature sensor. The vertical axis represents the temperature (°C) described with a linear scale, while the horizontal axis represents the elapsed time (hour:minute:second) described with a linear scale. The vertical lines in the graph represent time intervals of 30 seconds. The horizontal line drawn over points on the vertical lines around 169°C represents a target temperature.

A single pulse in the temperature change in the graph corresponds to a single cycle for processing a single thin layer 29a, that is, the time from the formation of a thin layer 29a, followed by the application of the laser beam, until immediately before the formation of the next thin layer 29a. The same applies to similar graphs below.

Also, each cycle in which the temperature is above the upper limit of the graph indicates that the laser beam was applied to the temperature measurement region 35a.

As illustrated in FIG. 4, the temperature rose abruptly at each moment when the laser beam was applied to the temperature measurement region 35a for the first temperature sensor. Thus, the derivative of the measured temperature makes it possible to more easily and reliably determine the occurrence of application of the laser beam to the temperature measurement region 35a and its time.

Next, the present inventor studied on how the temperature in the region 22 around the modeling region would be changed with time by the adjusted power supplied to the infrared heaters 31 to maintain the temperature of the center portion of the modeling region 20 within the target temperature range.

FIG. 5A is a graph for a high-melting point powder material plotting the temperature distribution (○) in the center portion of the modeling region 20 along elapsed time and the temperature distribution (●) in the region 22 around the modeling region along the elapsed time under power control without application of a laser beam. The vertical axis represents the measured temperature (°C) while the horizontal axis represents the elapsed time (minute) from the start of modeling.

Also, the white curve is obtained by linking spots where many of the plotted points in the temperature distribution in the region 22 around the modeling region along the elapsed time are present, and is a correction curve considered to be likely to occur. This can be expressed as a correction equation as below.

$$\mathrm{Ti2tc} = \mathrm{Ts} - ((\mathrm{Ts} - \mathrm{Ti})/\mathrm{Csi}^{t}) \qquad (1)$$

where Ti2tc is a target temperature for the second temperature sensor 33b (second target temperature (°C)),
Ts is a saturation temperature (a temperature at which the temperature in the region 22 around the modeling region stops changing (°C); 186°C in the test),
Ti is a start temperature (the temperature in the region 22 around the modeling region at the point of switching from the control based on the first temperature sensor 33a to the control based on the second temperature sensor 33b (°C)),
Csi is a saturation coefficient (the magnitude of the slope of behavior from the start temperature toward the saturation temperature; 1.025 in the test), and
t is the elapsed time (the length of time measured from the time point corresponding to the start temperature (minute)).

This correction equation (1) and the correction coefficient were derived by hypothesizing various equations and selecting one suitable for the test. Other suitable methods such as polynomial interpolation are usable.

On the other hand, FIG. 5B is a graph for a low-melting point powder material plotting the temperature distribution (○) in the center portion of the modeling region 20 along elapsed time and the temperature distribution (●) in the region 22 around the modeling region along the elapsed time under power control without application of a laser beam.

Also, the white curve is obtained by linking spots where many of the plotted points in the temperature distribution in the region 22 around the modeling region along the elapsed time are present, and is a curve considered to be likely to occur.

FIG. 5B differs from FIG. 5A in the behavior of the temperature until reaching the saturation. Still, correction equation (1) can be used also in this case by setting the saturation coefficient (Csi) at 1.012.

(b) How to Handle Case Where Heat Has Been Accumulated in Layers under Thin Layer 29a

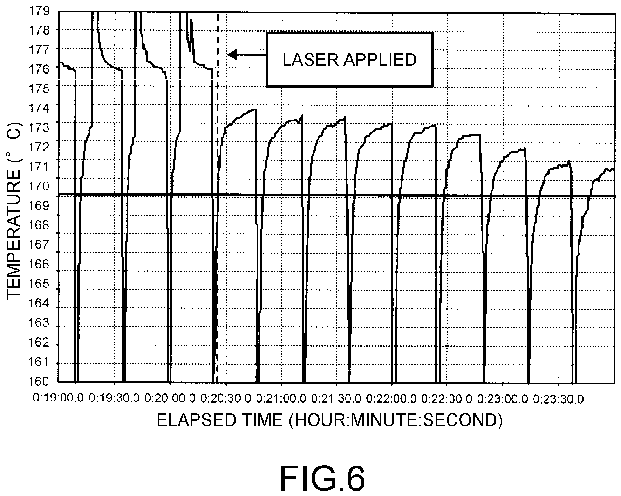

FIG. 6 is a graph illustrating a time-series change in temperature of the temperature measurement region 35a of a plurality of thin layers 29a laminated after a laser beam was applied to the temperature measurement region 35a of a plurality of thin layers 29a in a row and then the applied laser beam stopped crossing the temperature measurement region 35a. The vertical axis represents the temperature (°C) while the horizontal axis represents the elapsed time (hour:minute:second). The vertical lines represent time intervals of 30 seconds, and the horizontal line drawn over points around 170°C represents a target temperature.

According to FIG. 6, the temperature of the temperature measurement region 35a was measured starting from the processing of the first thin layer 29a after the applied laser beam stopped crossing the temperature measurement region 35a, to the end of the processing of the ninth thin layer 29a. The temperature, which was approximately 5°C higher than the target temperature at the beginning, dropped gradually and by the ninth layer the temperature dropped to be in a range in which it was less than 2°C higher than the target temperature. Though not illustrated in FIG. 6, it was confirmed that the temperature returned to the target temperature after the processing of about 20 thin layers 29a.

From this test, it is found that it is possible to switch back to the control based on the first temperature sensor 33a after successively processing at least 9 layers and preferably about 20 layers in the state where the applied laser beam does not cross the temperature measurement region 35a for the first temperature sensor 33a. Note that the number of layers with which the control can be switched back varies depending the type of powder material, the size of the powder bed fusion apparatus, and so on and can therefore be changed as appropriate.

(iv) Control Device 104

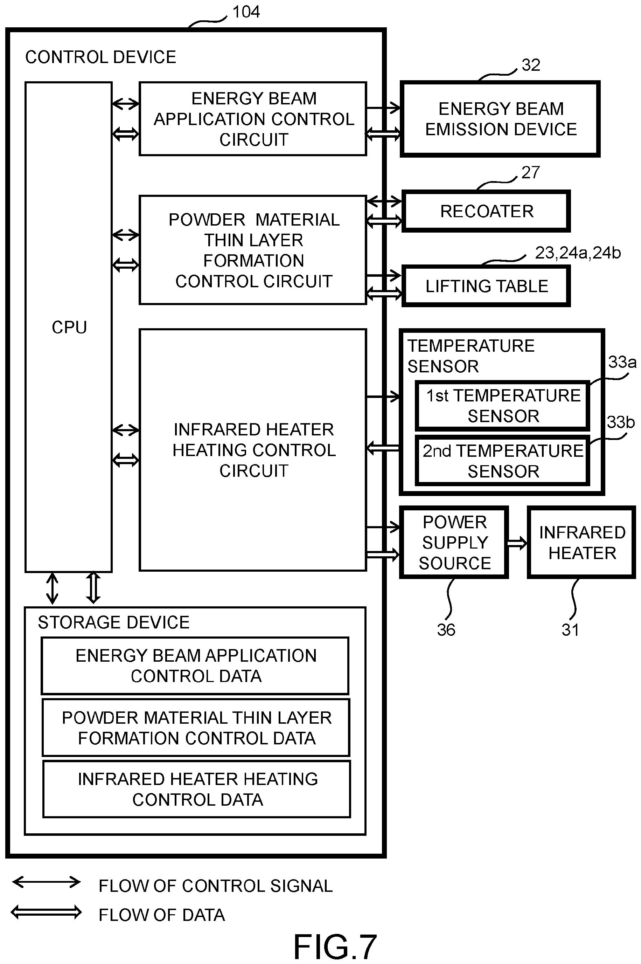

FIG. 7 is a block diagram illustrating the configuration of the control device 104, which is configured with the above study results taken into consideration.

The control device 104 comprises a central processing unit (CPU), an energy beam application control circuit, a powder material thin layer formation control circuit, an infrared heater heating control circuit, and a storage device.

The energy beam application control circuit controls the energy beam emission device 32.

Specifically, the energy beam application control circuit turns on or off the energy beam source to emit or stop emitting an energy beam. The energy beam application control circuit also controls the beam scanning means, such as a mirror, which reflects the energy beam to scan the energy beam in X and Y directions, to move the energy beam to necessary spots on the modeling region 20. The energy beam application control circuit also controls the optical system, such as a lens, to focus the energy beam at the surface of the thin layer 29a.

This control circuit needs to perform the above control with suitable timing relative to the control by the powder material thin layer formation control circuit to be described next.

The powder material thin layer formation control circuit controls the recoater 27 and the lifting tables 23, 24a, and 24b.

Specifically, the powder material thin layer formation control circuit vertically moves the first and third lifting tables 24a and 24b of the two powder material storage containers 17a and 17b and the second lifting table 23 of the modeling container 16 by predetermined distances, and moves the recoater 27 leftward or rightward with suitable timing relative to these movements.

The infrared heater heating control circuit controls the infrared temperature sensors 33a and 33b, a power supply source 36, and the infrared heaters 31.

Specifically, the infrared heater heating control circuit performs: temperature measurements with the first temperature sensor 33a and the second temperature sensor 33b; a power adjustment for adjusting the power to bring the temperature of the surface of the thin layer 29a closer to the target temperature based on the temperatures measured by the temperature sensors 33a and 33b; and a control selection for selecting the control based on one of the temperature sensors 33a and 33b.

In the above control by the energy beam application control circuit and the above control by the powder material thin layer formation control circuit, a single cycle is equal to the time taken to process a single thin layer 29a, which is about 20 to 60 seconds. In the above control by the infrared heater heating control circuit, a single cycle is equal to 200 msec. FIG. 13C illustrates the relation between them.

The storage device stores energy beam application control data, powder material thin layer formation control data, and infrared heater heating control data.

The energy beam application control data includes data on the timing to turn on and off the laser beam source, data on the angle, rotational speed, and timing of rotation of the mirror in the beam scanning means, data on the amount and timing of forward-backward movement of the optical system, such as a lens, slice data (data on the laser beam application region for each thin layer, and the like), and so on.

The powder material thin layer formation control data includes data on the amounts of vertical movements of the lifting tables 24a and 24b, the distance and timing of leftward-rightward movement of the recoater 27, slice data (data on the thickness of each thin layer 29a, the number of thin layers 29a to be laminated, and the like) and so on.

The infrared heater heating control data includes a first target temperature (T1tc) for the first temperature sensor 33a, an abnormal temperature rise derivative threshold value (DTlim), the saturation temperature (Ts), the saturation coefficient (Csi), the maximum number of successively laminated thin layers (Clim) representing a timing to switch back to the control based on the first temperature sensor 33a after switching to the control based on the second temperature sensor 33b, and so on. The maximum number of successively laminated thin layers is the number of thin layers 29a successively laminated without application of the energy beam to the temperature measurement region 35a for the first temperature sensor 33a during the control based on the second temperature sensor 33b.

Control signals and data are communicated between control circuit components and the CPU in the control device 104 and between the storage device and the CPU, and control signals and data are communicated also between control circuit components and their corresponding apparatus components.

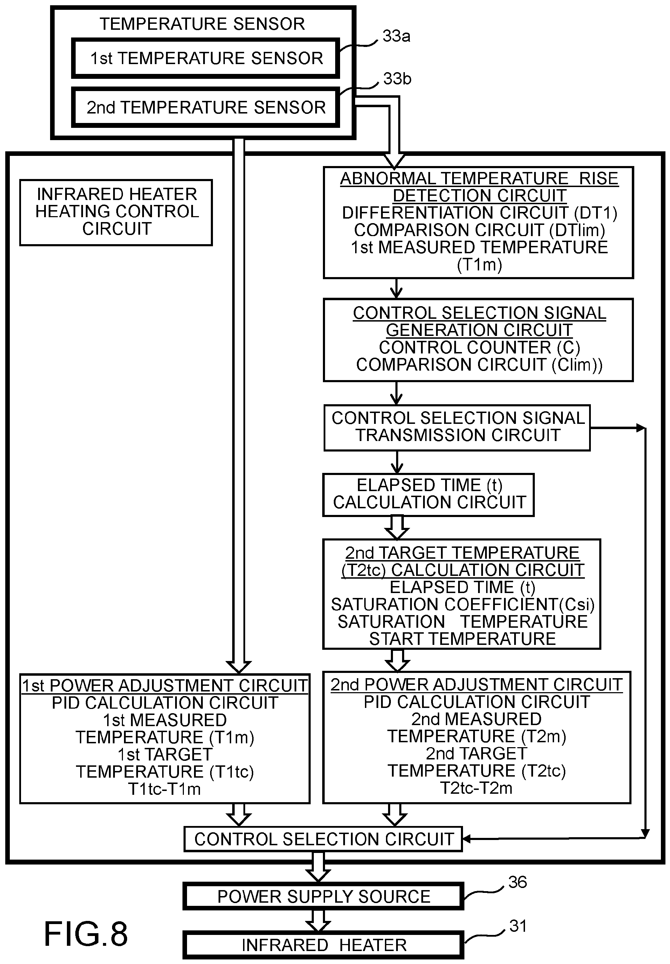

Next, the infrared heater heating control circuit will be specifically described with reference to FIG. 8.

FIG. 8 is a block diagram illustrating the configuration of the infrared heater heating control circuit.

The infrared heater heating control circuit comprises a first power adjustment circuit, an abnormal temperature rise detection circuit, a control selection signal generation circuit, a control selection signal transmission circuit, an elapsed time calculation circuit, a second target temperature calculation circuit, a second power adjustment circuit, and a control selection circuit.

The first power adjustment circuit constantly receives a first measured temperature (T1m) from the first temperature sensor 33a, receives the first target temperature (T1tc) from the storage device, performs a PID (Proportional Integral-Differential) calculation based on T1tc - T1m, and outputs adjusted-power data signal.

The abnormal temperature rise detection circuit constantly receives the first measured temperature (T1m) from the first temperature sensor 33a, calculates the derivative (DT1) of the first measured temperature (T1m) with a differentiation circuit, compares the derivative (DT1) and the abnormal temperature rise derivative threshold value (DTlim) received from the storage device with a comparison circuit, and outputs a signal indicating whether there is an abnormal temperature rise.

The control selection signal generation circuit sets the count value (C) of a control counter to zero upon detection of an abnormal temperature rise during the control based on the first temperature sensor 33a. In this case, the control selection signal generation circuit outputs a signal for switching to the control based on the second temperature sensor 33b. This can eliminate the effect of the abrupt temperature rise at the temperature measurement region 35a by application of the laser beam.

Also, the control selection signal generation circuit counts the number (count value) of thin layers 29a laminated and processed (C) after the switching to the control based on the second temperature sensor 33b. Then, during the control based on the second temperature sensor 33b, the control selection signal generation circuit compares the number of thin layers 29a laminated and processed (C) and the maximum number of successively laminated thin layers (Clim), which represents a timing to switch back to the control based on the first temperature sensor 33a. Then, when the count value (C) reaches or exceeds the maximum number of successively laminated layers (Clim), the control selection signal generation circuit outputs a signal for switching back to the control based on the first temperature sensor 33a. This can eliminate the effect of the abnormal temperature rise by heat accumulation.

The control selection signal transmission circuit transmits a control selection signal to the elapsed time calculation circuit and the control selection circuit. The control selection signal is a signal for selecting one of the control based on the first temperature sensor 33a and the control based on the second temperature sensor 33b. In other words, the control selection signal is a signal for selecting whether to supply power adjusted by the first power adjustment circuit or to supply power adjusted by the second power adjustment circuit to the infrared heater 31.

The elapsed time calculation circuit calculates the time (minute) elapsed since switching to the control based on the second temperature sensor upon detection of an abnormal temperature rise during the control based on the first temperature sensor.

The second target temperature calculation circuit calculates a second target temperature (T2tc) from the correction equation (1) by using the elapsed time (t) received from the elapsed time calculation circuit, the saturation coefficient (Csi) and the saturation temperature (°C) received from the storage device, and the temperature of the thin layer 29a measured by the second temperature sensor 33b immediately after the switching to the control based on the second temperature sensor 33b (start temperature)(°C) .

The second power adjustment circuit receives a second measured temperature (T2m) from the second temperature sensor 33b, receives the second target temperature (T2tc) from the second target temperature calculation circuit, performs a PID calculation based on T2tc - T2m, and outputs an adjusted-power data signal.

The control selection circuit selects one of the adjusted power calculated by the first power adjustment circuit and the adjusted power calculated by the second power adjustment circuit based on the control selection signal received from the control selection signal transmission circuit, and transmits the corresponding adjusted-power data signal to the power supply source 36. The power supply source 36 generates the corresponding adjusted power and outputs it to the infrared heaters 31.

(2) Description of Powder Bed Fusion Method According to Embodiment of The Present Invention

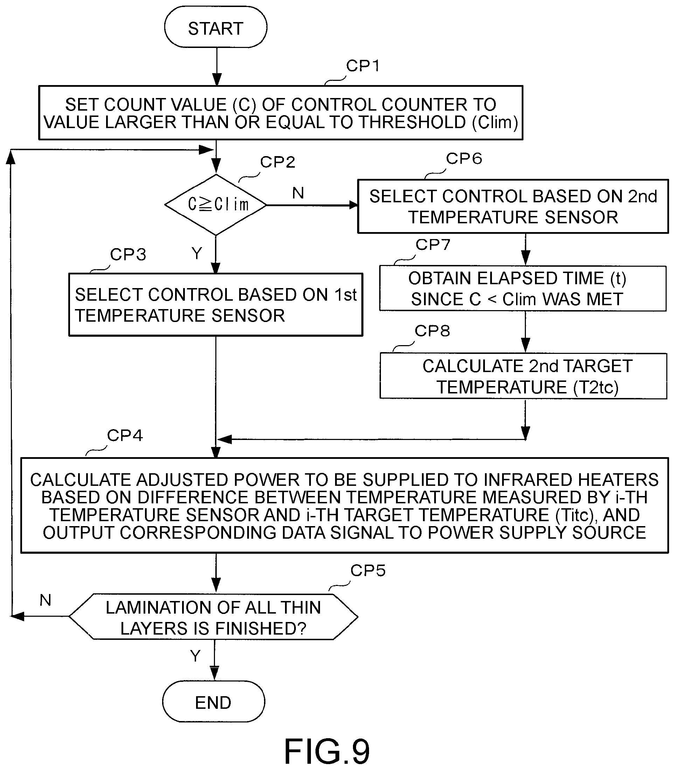

A powder bed fusion method according to the embodiment of the present invention will be described with reference to FIGS. 7 to 15.

Among these figures, FIG. 13A in particular is a graph illustrating time-series changes in the first target temperature and the second target temperature. The vertical axis represents temperature (°C) described with a linear scale, while the horizontal axis represents time (t) described with a linear scale. The start point of the temperature and time corresponds to that in FIG. 5A.

The first target temperature is the temperature of the center portion of the modeling region 20 and preferably remains unchanged, and is therefore not changed with time. The second target temperature, on the other hand, is a temperature set according to the actually measured temperature in the region 22 around the modeling region, and is therefore changed to gradually rise with time from a lower temperature.

Also, the second target temperature is saturated at a temperature higher than the first target temperature since the second target temperature is set according to the actual measurement. The actual temperature in the region 22 around the modeling region is dependent on the surrounding environment of the modeling container 16, the type of the powder material 29 used in the modeling, and so on, and can be high or low. The actual temperature in the region 22 around the modeling region is usually different from the temperature of the center portion of the modeling region 20.

Also, FIG. 13B illustrates an example of control in a case of processing a plurality of thin layers 29a based on the first and second target temperatures illustrated in FIG. 13A, and is a graph illustrating an enlarged version of the time range "SEE FIG.13B" on the time axis in FIG. 13A.

Above the graph in FIG. 13B is described the number of thin layers 29a of the powder material laminated and processed (which is also the number of bonded layers 29b laminated) along the time (t) axis of the graph. Each number is the number of layers laminated.

Also, among the arrows illustrated below the described number of thin layers 29a of the powder material laminated and processed, each dotted arrow indicates switching from the control based on the first temperature sensor 33a to the control based on the second temperature sensor 33b from that point, while each solid arrow indicates switching back from the control based on the second temperature sensor 33b to the control based on the first temperature sensor 33a from that point. In this embodiment, to facilitate the description, the maximum number of successively laminated layers (Clim) is a small number including the layer at the time of switching the control, and is six.

Also, the bold solid lines illustrated on the bold dashed and single-dotted lines, representing the target temperatures, each indicates performing the control based on the corresponding one of the first temperature sensor 33a and the second temperature sensor 33b.

(i) Infrared Heater Heating Control

Firstly, the infrared heater heating control will be described with reference to FIGS. 7 to 10.

First, the count value (C) of the control counter of the control selection signal generation circuit is set to a value larger than or equal to a threshold value (Clim) (CP1).

Then, the control selection signal generation circuit compares the count value (C) and the threshold value (Clim) with each other (CP2).

If C ≥ Clim, the control based on the first temperature sensor is selected (CP3). In the initial operation, this condition is always met since the count value (C) is set to a value larger than or equal to the threshold value (Clim).

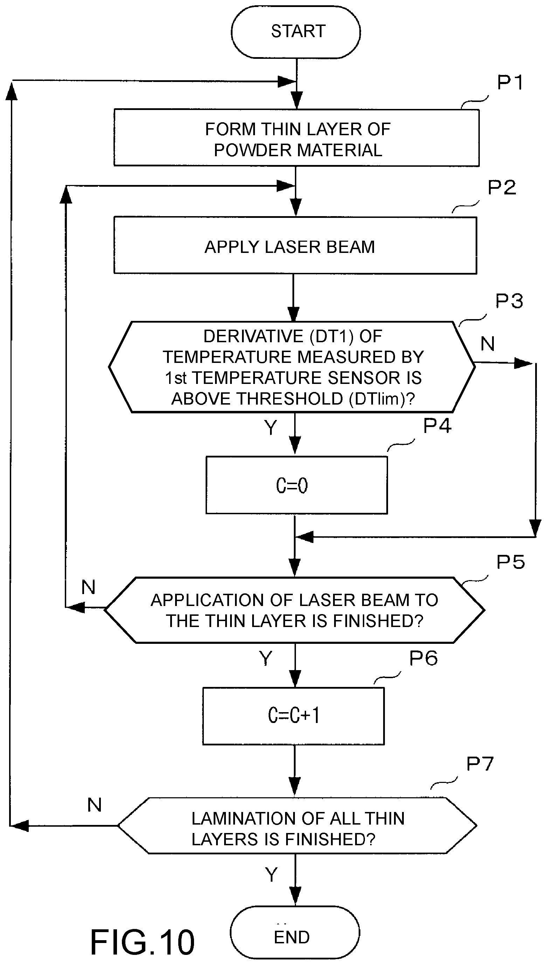

Note that after this, the initially set count value (C) increments by one each time the processing of a single thin layer 29a is finished as long as the energy beam is not applied to the temperature measurement region 35a for the first temperature sensor 33a through processes P3, P5, and P6 in FIG. 10. C ≥ Clim is maintained since the initial value of the count value (C) is set to a value larger than or equal to the threshold value (Clim).

On the other hand, if the energy beam is applied to the temperature measurement region 35a for the first temperature sensor 33a through the process P3 and a process P4 in FIG. 10, the count value (C) is set to zero.

If C < Clim, a control selection signal is transmitted from the control selection signal transmission circuit to the control selection circuit to select the control based on the second temperature sensor 33b (CP6). During the control based on the second temperature sensor 33b, the count value (C) may possibly be set to zero repeatedly through the processes P3 and P4. In that case, the count value (C) is counted from zero repeatedly. Thus, the control based on the second temperature sensor 33b starts when the count value (C) is firstly set to zero, and continues until the count value (C) reaches Clim after it is lastly set to zero. Accordingly, a larger number of thin layers 29a than Clim need to be processed before switching back to the control based on the first temperature sensor 33a.

If C < Clim, then, the control selection signal is transmitted from the control selection signal transmission circuit to the elapsed time calculation circuit to calculate the time elapsed since the condition C < Clim was met (CP7), and also the second target temperature (T2tc) is calculated based on the elapsed time (t) with the second target temperature (T2tc) calculation circuit (CP8).

After the control processes CP3 and CP8, in accordance with the selected control based on the i-th temperature sensor (i = 1 or 2) 33a or 33b, the adjusted power to be supplied to the infrared heaters 31 is calculated based on the difference between the measured temperature (Tim) and the i-th target temperature (Titc), and the corresponding data signal is outputted (CP4).

Then, whether a predetermined number of thin layers 29a of the power material all have finished being laminated (CP5). If not all thin layers 29a have finished being laminated, the processing returns to the control process of comparing the count value (C) and the threshold value (Clim) (CP2). On the other hand, if all thin layers 29a have finished being laminated, the control process is terminated. (ii) Powder Bed Fusion Method Based on Infrared Heater Heating Control

Next, a powder bed fusion method according to the embodiment of the present invention will be described with reference to FIGS. 7 to 15.

The processing of a single thin layer takes about 20 to 60 seconds (1 cycle), though it varies depending on the size of the model.

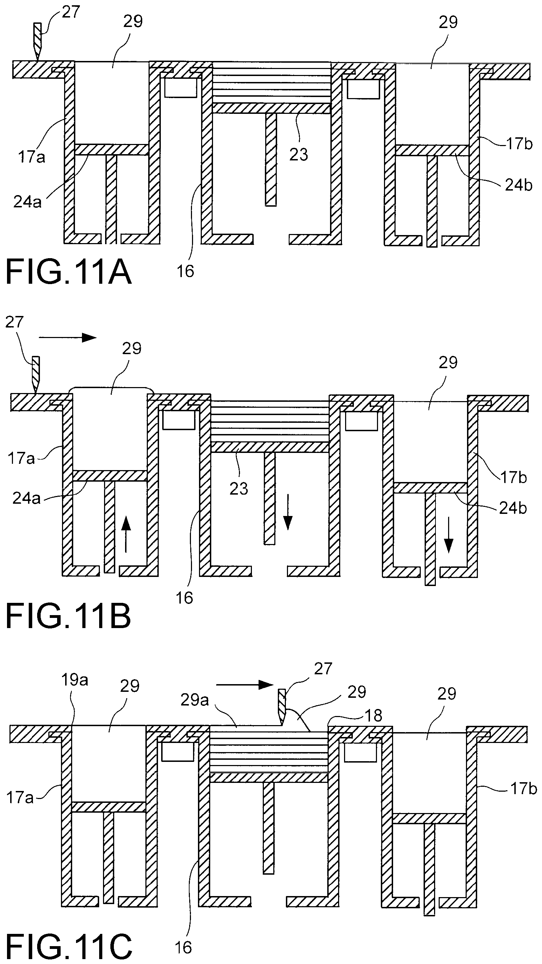

Firstly, as illustrated in FIG. 11A, the powder material 29 is loaded into the first and second powder material storage containers 17a and 17b.

Then, the powder material 29 in the first and second powder material storage containers 17a and 17b is heated to below but close to the melting point of the powder material 29 with the heaters around the first and second powder material storage containers 17a and 17b. Also, the modeling container 16 is heated with the heaters around the modeling container 16 and the infrared heaters 31 above the modeling container 16 to bring the temperature inside the modeling container 16 to below but close to the melting point of the powder material 29.

Then, the control device 104 is caused to operate. Thereafter, until the modeling of all thin layers 29a is finished, the infrared heater heating control circuit performs temperature control to control the heating of the infrared heaters 31 so as to bring the surface temperature of the thin layer 29a in the modeling region 20 to the first target temperature. The infrared heater heating control circuit initially performs the control based on the first temperature sensor 33a, for which the temperature measurement region 35a is set in the center portion of the modeling region 20. Note that, until the modeling of all thin layers 29a is finished, the first temperature sensor 33a and the second temperature sensor 33b are kept on, and adjusted powers to be supplied to the infrared heaters 31 are calculated based on the respective temperature measurements.

Meanwhile, six thin layers of the power material are already laminated as the model's base in FIG. 11A.

Then, as illustrated in FIG. 11B, the thin layer formation control circuit raises the lifting table 24a in the first powder material storage container 17a to project the powder material 29 in an amount slightly larger than a single thin layer 29a. Also, the thin layer formation control circuit lowers the lifting table 23 in the modeling container 16 by an amount corresponding a single thin layer 29a, and lowers the lifting table 24b in the second powder material storage container 17b by an amount large enough for the second powder material storage container 17b to store the part of the powder material 29 remaining after carrying it into the modeling container 16.

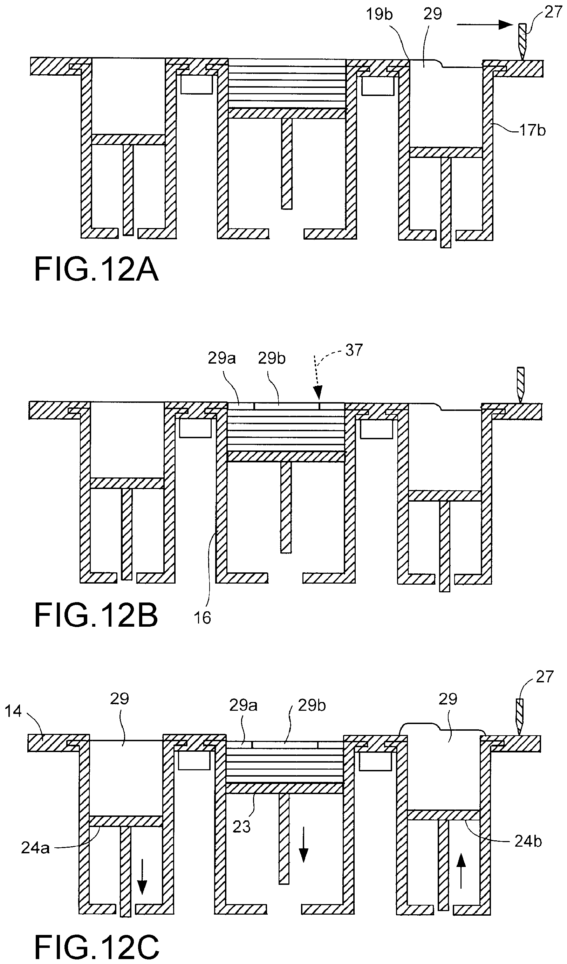

Then, as illustrated in FIG. 11C and FIG. 12A, the thin layer formation control circuit moves the recoater 27 rightward across the first opening portion 19a to push and take the powder material 29 projecting from the first powder material storage container 17a. The thin layer formation control circuit further moves the recoater 27 rightward across the second opening portion 18 to carry the taken powder material 29 into the modeling container 16 and thereby form a thin layer 29a of the powder material (P1). Thereafter, the thin layer formation control circuit further moves the recoater 27 rightward across the second opening portion 19b to put the powder material 29 remaining after the formation of the thin layer into the second powder material storage container 17b.

Then after the step in FIG. 12A, as illustrated in FIG. 12B, the thin layer 29a of the power material in the modeling container 16 is melted with a laser beam 37 and solidified to form a bonded layer 29b (P2). Note that at this point, the bonded layer 29b is solidified but is still somewhat soft since its periphery is near the melting temperature. The same applies to the subsequent layers.

During the above too, the infrared heater heating control circuit performs temperature control such that the surface temperature of the thin layer 29a in the modeling region 20 is brought closer to the first target temperature.

If the path of application of the laser beam does not cross the temperature measurement region 35a during the application of the laser beam (P3, CP2), the control based on the first temperature sensor 33a is continued (CP3) . Also, if the laser beam application to the thin layer 29a is not finished yet (P5), the application of the laser beam 37 is continued (P2). Proper temperature control is performed such that the temperature of the thin layer 29a in the modeling region 20 is brought closer to the first target temperature.

On the other hand, if the path of application of the laser beam 37 crosses the temperature measurement region 35a (P3), an abnormal temperature rise occurs at the temperature measurement region 35a. When the first temperature sensor 33a detects that, the count value is reset (C = 0) (P4), so that the control is switched to the control based on the second temperature sensor 33b (CP2, CP6). Thus, proper temperature control is performed such that the temperature in the region 22 around the modeling region in the thin layer 29a is brought closer to the second target temperature. As a result, proper temperature control is performed such that the surface temperature of the thin layer 29a in the modeling region 20 is brought closer to the first target temperature.

This switching of the control corresponds to cases where an abnormal temperature rise is detected in the middle of the processing of the 1st, 14th, and 27th thin layers 29a in FIG. 13B.

Here, the start temperature is the temperature (°C) measured by the second temperature sensor 33b at the time of switching to the control based on the second temperature sensor 33b upon detection of an abnormal temperature rise by the first temperature sensor 33a, that is, in FIG. 13B, when an abnormal temperature rise is detected in the middle of the processing of the 1st, 14th, and 27th thin layers 29a. Meanwhile, Clim is set at 6 in FIG. 13B.

Also, if the application of the laser beam 37 to the thin layer 29a is not finished yet (P5), the application of the laser beam 37 is continued (P2). Note that there is a case where the path of application of the laser beam 37 repetitively crosses the temperature measurement region 35a for the first temperature sensor 33a during the control based on the second temperature sensor 33b. Each time this occurs, the count value is reset (C = 0) (P3, P4).

When the application of the laser beam 37 to the thin layer 29a is finished (P5), the count value is incremented by one (P6), and the control process proceeds to the processing of the next thin layer 29a from the state of FIG. 12C (P7, P1). Then, though not illustrated, the recoater 27 is moved leftward across the third opening portion 19b to take the powder material 29 from the second powder material storage container 17b, across the second opening portion 18 to form a thin layer 29a in the modeling container 16, and then across the first opening portion 19a to put the remaining powder material 29 into the first powder material storage container 17a.

Thereafter, in the modeling container 16, a specific region in the thin layer 29a of the powder material is irradiated with the laser beam in accordance with the slice data to be melted and then solidified to form a bonded layer 29b. During the above, the control based on the second temperature sensor 33b is performed. When six thin layers 29a including the above thin layers 29a are processed in this manner after the switching to the control based on the second temperature sensor 33b, the count value (C) is six, so that $C \geq Clim$ (CP2). Hence, the control is switched back to the control based on the first temperature sensor 33a (CP3). See the control based on the second sensor 33b for the 14th to 19th layers in FIG. 13B.

Note that there is a case where the application path of the laser beam for the next thin layer 29a and the second next thin layer 29a also crosses the temperature measurement region 35a for the first temperature sensor 33a during the control based on the second temperature sensor 33b. In that case, the count value (C) is re-counted from zero each time (P3, P4). Thus, the control based on the second temperature sensor 33b continues until the count value (C) reaches Clim from the last thin layer with which the count value (C) is set to zero. In other words, there can be a case where the control based on the second temperature sensor 33b continues until the processing of more than six thin layers 29a is finished after the switching to the control based on the second temperature sensor 33b. See the control based on the second sensor 33b for the first to eighth layers in FIG. 13B.

Subsequently, the 20th and subsequent layers are processed in accordance with the control in FIG. 13B. The modeling ends when a predetermined number of bonded layers 29b finish being laminated (CP5, P7).

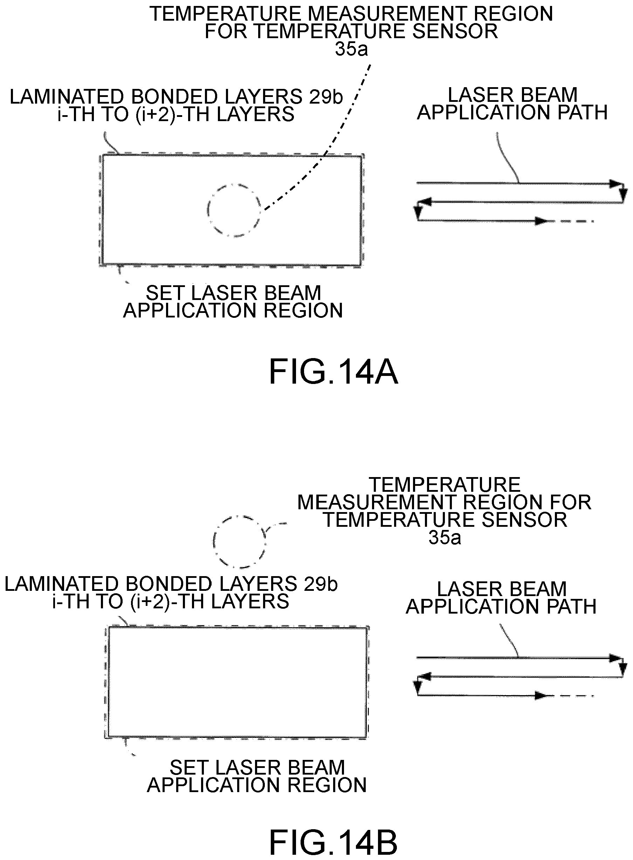

Then, the modeling container 16 is taken out of the apparatus along with the model and cooled. At the point when the modeling container 16 is taken out of the apparatus, the temperature inside the modeling container 16 is near the melting temperature, and therefore the model is not yet completely solidified but is somewhat soft. As the cooling is then continued, the model is completely solidified and becomes hard in the middle of the cooling. Further, after waiting until the temperature drops to such a point that the model can be taken out, the model is taken out. FIG. 14A is a top view illustrating the processing of three (i-th to (i+2)-th) thin layers 29a after switching to the control based on the second temperature sensor 33b due to the laser beam application region crossing the temperature measurement region 35a during the application of the laser beam to the i-th layer in accordance with the control based on the first temperature sensor 33a.

As illustrated in FIG. 14A, a model is obtained with warpage and shrinkage suppressed.

FIG. 14B is a top view illustrating the processing of i-th to (i+2)-th thin layers 29a obtained by applying the laser beam to the i-th to (i+2)-th layers in accordance with the control based on the first temperature sensor 33a without the laser beam application region crossing the temperature measurement region 35a.

As illustrated in FIG. 14B, a model is obtained with shrinkage suppressed. It can be seen that the processing of thin layers 29a in FIG. 14A is effective to such an extent that it cannot be distinguished from the processing of thin layers 29a in FIG. 14B.

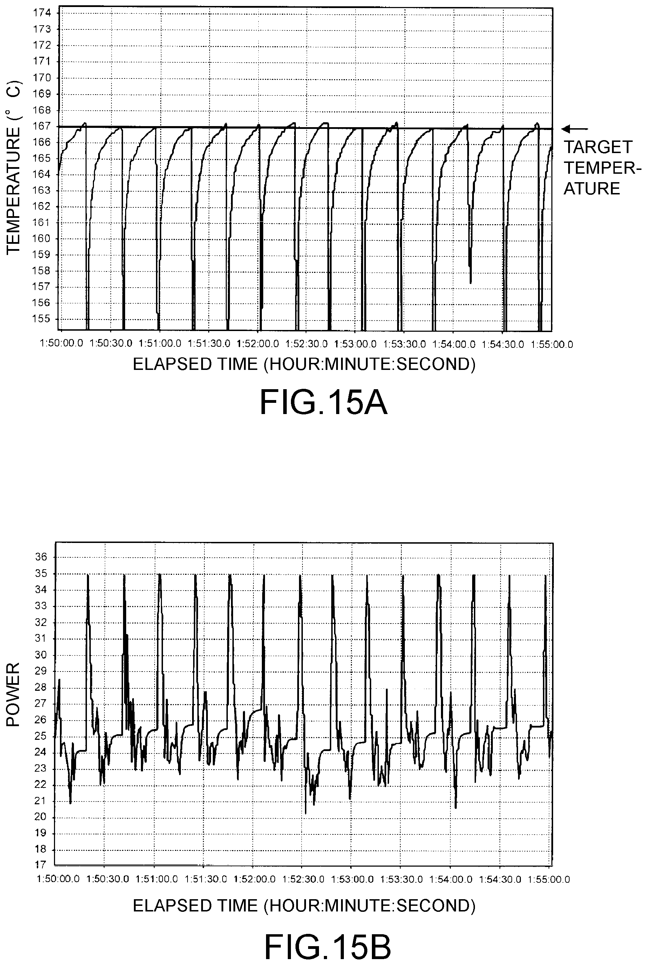

FIG. 15A is a graph representing a study carried out when the result in FIG. 14B was obtained, and illustrating the surface temperature of thin layers 29a along elapse of time measured by the infrared temperature sensor 33a in the state where the thin layers 29a were heated by the infrared heaters 31 under power control without the applied laser beam crossing the temperature measurement region 35a. The vertical axis represents the surface temperature of the thin layers 29a (°C) while the horizontal axis represents the elapsed time (hour:minute:second). The vertical lines in the graph represent time intervals of 30 seconds. The horizontal line drawn over points on the vertical lines at 167°C represents a target temperature.

FIG. 15B is a graph illustrating a time-series change in the adjusted power outputted to the infrared heaters 31 according to the measured temperature in FIG. 15A. The vertical axis represents the power (duty cycle (%)) while the horizontal axis represents the elapsed time (hour:minute:second). The vertical lines represent time intervals of 30 seconds.

Note that in this test, the power for the heaters other than the infrared heaters was fixed to bring the surface temperature of the thin layers 29a to approximately 150°C.

It can be seen from FIGS. 15A and 15B that the power for the infrared heaters 31 was properly controlled based on the measured temperature to bring the surface temperature of the thin layers 29a to the target temperature.

(Comparative Example)

FIG. 16 is a perspective view illustrating the relative arrangement of the surface of a thin layer 50 of a powder material formed in a modeling container, a laser beam emission device (energy beam emission device) 51, an infrared temperature sensor 52, and infrared heaters 53 disposed above the thin layer 50 in a powder bed fusion apparatus according to a comparative example. Portions seen through others are illustrated with dashed lines.

As illustrated in FIG. 16, the differences from the powder bed fusion apparatus in FIG. 3 are that a single infrared temperature sensor 52 is disposed inside a housing chamber near the laser beam emission device 51 and that a temperature measurement region 54 is present near the center of the modeling region, as indicated by the dashed and single-dotted line.

FIG. 17A is a graph illustrating the surface temperature of thin layers 50 of the power material along elapse of time measured by the infrared temperature sensor 52 in the case where some thin layers 50 are heated by the infrared heaters 53 under power control with a laser beam applied to the temperature measurement region 54. The vertical axis, the horizontal axis, the time intervals (vertical lines), and the target temperature (horizontal line) correspond to those in FIG. 15A except that the scale values of the elapse time on the horizontal axis are different from those in FIG. 15A.

FIG. 17B is a graph illustrating a time-series change in the adjusted power outputted to the infrared heaters according to the measured temperature in FIG. 17A. The vertical axis, the horizontal axis, and the time intervals (vertical lines) correspond to those in FIG. 15B except that the scale values of the elapse time on the horizontal axis are different from those in FIG. 15B.

FIG. 17C is a graph according to the comparative example and illustrates a time-series change in the surface temperature of the thin layers 50 measured at the same time as FIG. 17A by another infrared temperature sensor not illustrated having its temperature measurement region in the modeling region other than the laser beam application region. The vertical axis, the horizontal axis, and the time intervals (vertical lines) correspond to those in FIG. 17A.

According to FIGS. 17A and 17B, the power outputted to the infrared heaters 53 decreases according to the measured temperature rising as a result of application of the laser beam. Accordingly, as illustrated in FIG. 17C, the temperature of the thin layers 50 in the modeling region other than the laser beam application region drops. This means that the temperature of the thin layers 50 in the entire modeling region drops.

This drop in temperature of the thin layers causes problems as below.

Specifically, during the drawing with the laser beam, the melted portions shrink, thereby forming a distorted model.

Also, since the melting becomes weaker, the bond to the lower layer becomes weaker, which may cause detachment of the bonded layers from each other.

Also, the amount of the melt is low in density, causing uneven solidification. This makes it impossible for the bonded layers to maintain their shape. Thus, the shape is distorted.

As described above, it can be seen that the processing of thin layers 29a in FIG. 14A according to the embodiment of the present invention is more accurate than and superior to the processing of thin layers 50 in FIGS. 17A to 17B.

As described above, the powder bed fusion apparatus according to the embodiment of the present invention comprises: the infrared heaters 32; the first temperature sensor 33a, which measures the temperature of a surface of a thin layer 29a; the second temperature sensor 33b, which measures the temperature of a surface of the thin layer 29a to which the laser beam 37 is not applied; and the infrared heater heating control circuit, which switches to the control based on the second temperature sensor 33b upon detection of an abnormal temperature rise during the control based on the first temperature sensor 33a, and outputs a data signal on the adjusted power to be supplied to the infrared heaters 31.

Thus, when the laser beam 37 is applied to the temperature measurement region 35a during the control based on the first temperature sensor 33a, an abnormal temperature rise is detected, and the control based on the first temperature sensor 33a is switched to the control based on the second temperature sensor 33b, and a data signal on the adjusted power to be supplied to the infrared heaters 31 is outputted. In this manner, the temperature control is performed properly without being affected by the abnormal temperature rise.

As a result, a model is obtained with warpage and shrinkage suppressed. Accordingly, the accuracy of the model is improved.

Further, the second target temperature for maintaining the first target temperature is set based on actual measurement. Thus, the temperature can be controlled without lowering the accuracy even with the control based on the second temperature sensor 33b.

Also, the control selection signal generation circuit outputs a control selection signal for switching back to the control based on the first temperature sensor 33a to the control selection circuit when the number of thin layers 29a successively laminated and processed without detection of an abnormal temperature rise after the switching to the control based on the second temperature sensor 33b reaches or exceeds a predetermined value.

This enables actual temperature measurement of the temperature measurement region 35a after its temperature returns to the normal range, and therefore further increases the accuracy of the temperature control.

Lastly, the invention described in the above embodiment will be summarized below as appendixes.

(Appendix 1)

A powder bed fusion apparatus for fabricating a model by applying an energy beam to a thin layer of a powder material to thereby melt the thin layer, solidifying the thin layer to thereby form a bonded layer, and laminating a plurality of the bonded layers, comprises:

an energy beam emission device that applies the energy beam to a surface of the thin layer;
an infrared heater that is provided above the thin layer and heats the thin layer;
a first temperature sensor that measures a first temperature of the surface of the thin layer;
a second temperature sensor that measures a second temperature of a surface of a region in the thin layer to which the energy beam is not applied; and
an infrared heater heating control circuit that switches to control based on the second temperature sensor upon detection of an abnormal temperature rise during control based on the first temperature sensor, and outputs a data signal on adjusted power to be supplied to the infrared heater.

(Appendix 2)

The powder bed fusion apparatus according to appendix 1, wherein the infrared heater heating control circuit further switches back to the control based on the first temperature sensor when the number of the thin layers successively laminated and processed without detection of the abnormal temperature rise after the switching to the control based on the second temperature sensor reaches or exceeds a set value.

(Appendix 3)

The powder bed fusion apparatus according to appendix 1 or 2, wherein in that the infrared heater heating control circuit comprises:

an abnormal temperature rise detection circuit that detects the abnormal temperature rise with the first temperature sensor;
a control selection signal generation circuit that generates a control selection signal for switching to the control based on the second temperature sensor upon detection of the abnormal temperature rise during the control based on the first temperature sensor, and generates a control selection signal for switching back to the control based on the first temperature sensor when the number of the thin layers successively laminated and processed without detection of the abnormal temperature rise after the switching to the control based on the second temperature sensor reaches or exceeds a set value; and
a control selection circuit that selects one of the control based on the first temperature sensor and the control based on the second temperature sensor in accordance with the control selection signal.

(Appendix 4)

The powder bed fusion apparatus according to appendix 3, wherein the abnormal temperature rise detection circuit comprises: a differentiation circuit that differentiates the first temperature; and a comparison circuit that compares the obtained derivative of the first temperature with a preset threshold value serving as a reference for determining the occurrence of the abnormal temperature rise.

(Appendix 5)

The powder bed fusion apparatus according to appendix 3, wherein
the control selection signal generation circuit further comprises a control counter, and
the control counter sets a value larger than or equal to the set value as a count value before start of modeling, sets the count value to zero when the abnormal temperature rise is detected, and increments the count value by one each time the thin layer is formed.

(Appendix 6)

The powder bed fusion apparatus according to appendix 5, wherein the control selection signal generation circuit further comprises a comparison circuit, and generates the control selection signal for switching to the control based on the first temperature sensor when the count value is larger than or equal to the set value.

(Appendix 7)

The powder bed fusion apparatus according to appendix 1 or 2, wherein the infrared heater heating control circuit generates the data signal on the adjusted power to be supplied to the infrared heater to bring the first temperature closer to a first target temperature during the control based on the first temperature sensor and to bring the second temperature closer to a second target temperature during the control based on the second temperature sensor.

(Appendix 8)

The powder bed fusion apparatus according to appendix 7, wherein
the first target temperature is set in advance at a temperature lower than a melting point of the powder material, and
the second target temperature is calculated from a correction equation including: an elapsed time measured since the detection of the abnormal temperature rise; a start temperature measured by the second temperature sensor immediately after the detection of the abnormal temperature rise; a saturation temperature derived based on a time-series change in the temperature measured by the second temperature sensor in advance; and a saturation coefficient.

(Appendix 9)

The powder bed fusion apparatus according to appendix 1, wherein the infrared heater heating control circuit comprises: a first power adjustment circuit that generates a data signal on adjusted power to be supplied to the infrared heater based on a difference between the measured first temperature and the first target temperature; and a second power adjustment circuit that generates a data signal on adjusted power to be supplied to the infrared heater based on a difference between the measured second temperature and the second target temperature.

(Appendix 10)

The powder bed fusion apparatus according to appendix 1, wherein the powder bed fusion apparatus further comprises:

a first powder material storage container and a second powder material storage container disposed on opposite sides of the modeling container;
a first lifting table that is provided in the modeling container and moves up and down with the thin layer placed thereon;
a second lifting table that is provided in the first powder material storage container and moves up and down with the powder material placed thereon;
a third lifting table that is provided in the second powder material storage container and moves up and down with the powder material placed thereon; and

a carrying member that moves across the first powder material storage container, the modeling container, and the second powder material storage container to carry the powder material from the first powder material storage container or the second powder material storage container and carry the powder material into the modeling container to thereby form the thin layer.

[Reference Signs List]

11, 13, 15 partition
12 laser window
14 partition (platform)
16 modeling container
17a first powder material storage container
17b second powder material storage container
18 second opening portion
19a first opening portion
19b third opening portion
20 modeling region
21 outer edge (of modeling region)
22 region around modeling region
23 second lifting table
24a first lifting table
24b third lifting table
25, 26a, 26b support shaft
27 recoater (carrying member)
28 endless belt
29 powder material
29a, 50 thin layer of powder material (or thin layer)
29b bonded layer
30a, 30b heater
31, 53 infrared heater
32, 51 laser beam emission device (energy beam emission device)
33a infrared temperature sensor (first temperature sensor)
33b infrared temperature sensor (second temperature sensor)
34a, 34b sensor window
35a, 35b, 54 temperature measurement region
36 power supply source
37 laser beam (energy beam)
52 infrared temperature sensor
100 powder bed fusion apparatus
101 chamber
102 housing chamber
103 modeling chamber
104 control device
201 modeling part
202 container housing part
203 recoater driving part

**Claims**

1. A powder bed fusion apparatus (100) for fabricating a model by applying an energy beam (37) to a thin layer (29a) of a powder material to thereby melt the thin layer, solidifying the thin layer to thereby form a bonded layer, and laminating a plurality of the bonded layers, comprises:

   an energy beam emission device (32) that applies the energy beam to a surface of the thin layer (29a);

an infrared heater (31) that is provided above the thin layer (29a) and heats the thin layer (29a);
a first temperature sensor (33a) that measures a first temperature of the surface of the thin layer (29a);
a second temperature sensor (33b) that measures a second temperature of a surface of a region in the thin layer to which the energy beam is not applied; and
an infrared heater heating control circuit that switches to control based on the second temperature sensor (33b) upon detection of an abnormal temperature rise during control based on the first temperature sensor (33a), and outputs a data signal on adjusted power to be supplied to the infrared heater (31).

2. The powder bed fusion apparatus according to claim 1, wherein the infrared heater heating control circuit further switches back to the control based on the first temperature sensor (33a) when the number of the thin layers successively laminated and processed without detection of the abnormal temperature rise after the switching to the control based on the second temperature sensor (33b) reaches or exceeds a set value.

3. The powder bed fusion apparatus according to claim 1 or 2, wherein the infrared heater heating control circuit comprises:

an abnormal temperature rise detection circuit that detects the abnormal temperature rise with the first temperature sensor (33a);
a control selection signal generation circuit that generates a control selection signal for switching to the control based on the second temperature sensor (33b) upon detection of the abnormal temperature rise during the control based on the first temperature sensor (33a), and generates a control selection signal for switching back to the control based on the first temperature sensor (33a) when the number of the thin layers successively laminated and processed without detection of the abnormal temperature rise after the switching to the control based on the second temperature sensor (33b) reaches or exceeds a set value; and
a control selection circuit that selects one of the control based on the first temperature sensor and the control based on the second temperature sensor in accordance with the control selection signal.

4. The powder bed fusion apparatus according to claim 3, wherein,
the control selection signal generation circuit further comprises a control counter, and
the control counter sets a value larger than or equal to the set value as a count value before start of modeling, sets the count value to zero when the abnormal temperature rise is detected, and increments the count value by one each time the thin layer is formed.

5. The powder bed fusion apparatus according to claim 4, wherein the control selection signal generation circuit further comprises a comparison circuit, and generates the control selection signal for switching to the control based on the first temperature sensor when the count value is larger than or equal to the set value.

6. The powder bed fusion apparatus according to claim 1, wherein the infrared heater heating control circuit comprises:
a first power adjustment circuit that generates a data signal on adjusted power to be supplied to the infrared heater based on a difference between the measured first temperature and a first target temperature; and a second power adjustment circuit that generates a data signal on adjusted power to be supplied to the infrared heater based on a difference between the measured second temperature and a second target temperature.

7. The powder bed fusion apparatus according to claim 1, wherein the powder bed fusion apparatus further comprises:

a modeling container (16) in which the thin layer of the powder material is formed;
a first powder material storage container (17a) disposed on one side of the modeling container (16);
a second powder material storage container (17b) disposed on another side of the modeling container (16);
a first lifting table (23) that is provided in the modeling container (16) and moves up and down with the thin layer placed thereon;
a second lifting table (24a) that is provided in the first powder material storage container (17a) and moves up and down with the powder material placed thereon;
a third lifting table (24b) that is provided in the second powder material storage container (17b) and moves up and down with the powder material placed thereon; and
a carrying member (27) that moves across the first powder material storage container (17a), the modeling container (16), and the second powder material storage container (17b) to carry the powder material from the first powder material storage container (17a) or the second powder material storage container (19b) and carry the powder material into the modeling container (16) to thereby form the thin layer.

FIG.1

FIG.2A

FIG.2B

FIG.3

FIG.4

FIG.5A

FIG.5B

FIG.6

104

**CONTROL DEVICE**

| ENERGY BEAM APPLICATION CONTROL CIRCUIT | → | ENERGY BEAM EMISSION DEVICE | 32 |

| POWDER MATERIAL THIN LAYER FORMATION CONTROL CIRCUIT | → | RECOATER | 27 |
| | → | LIFTING TABLE | 23,24a,24b |

CPU

| INFRARED HEATER HEATING CONTROL CIRCUIT | → | TEMPERATURE SENSOR |
| | | 1st TEMPERATURE SENSOR | 33a |
| | | 2nd TEMPERATURE SENSOR | 33b |

| POWER SUPPLY SOURCE | → | INFRARED HEATER |

36    31

**STORAGE DEVICE**

ENERGY BEAM APPLICATION CONTROL DATA

POWDER MATERIAL THIN LAYER FORMATION CONTROL DATA

INFRARED HEATER HEATING CONTROL DATA

←——→  FLOW OF CONTROL SIGNAL

⇐===⇒  FLOW OF DATA

FIG.7

TEMPERATURE SENSOR

1st TEMPERATURE SENSOR — 33a

2nd TEMPERATURE SENSOR — 33b

INFRARED HEATER HEATING CONTROL CIRCUIT

ABNORMAL TEMPERATURE  RISE DETECTION CIRCUIT
DIFFERENTIATION CIRCUIT (DT1)
COMPARISON CIRCUIT (DTlim)
1st MEASURED TEMPERATURE (T1m)

CONTROL SELECTION SIGNAL GENERATION CIRCUIT
CONTROL COUNTER (C)
COMPARISON CIRCUIT (Clim))

CONTROL SELECTION SIGNAL TRANSMISSION CIRCUIT

ELAPSED TIME (t) CALCULATION CIRCUIT

2nd TARGET TEMPERATURE (T2tc) CALCULATION CIRCUIT
ELAPSED TIME (t)
SATURATION COEFFICIENT(Csi)
SATURATION   TEMPERATURE
START TEMPERATURE

1st POWER ADJUSTMENT CIRCUIT
PID CALCULATION CIRCUIT
1st MEASURED TEMPERATURE (T1m)
1st TARGET TEMPERATURE (T1tc)
T1tc-T1m

2nd POWER ADJUSTMENT CIRCUIT
PID CALCULATION CIRCUIT
2nd MEASURED TEMPERATURE (T2m)
2nd TARGET TEMPERATURE (T2tc)
T2tc-T2m

CONTROL SELECTION CIRCUIT

POWER SUPPLY SOURCE — 36

INFRARED  HEATER — 31

FIG.8

START

CP1

SET COUNT VALUE (C) OF CONTROL COUNTER TO
VALUE LARGER THAN OR EQUAL TO THRESHOLD (Clim)

CP2

$C \geqq Clim$

CP6

SELECT CONTROL BASED ON 2nd
TEMPERATURE SENSOR

CP3

Y

SELECT CONTROL BASED ON 1st
TEMPERATURE SENSOR

N

CP7

OBTAIN ELAPSED TIME (t)
SINCE C < Clim WAS MET

CP8

CALCULATE 2nd TARGET
TEMPERATURE (T2tc)

CP4

CALCULATE ADJUSTED POWER TO BE SUPPLIED TO INFRARED HEATERS
BASED ON DIFFERENCE BETWEEN TEMPERATURE MEASURED BY i-TH
TEMPERATURE SENSOR AND i-TH TARGET TEMPERATURE (Titc), AND
OUTPUT CORRESPONDING DATA SIGNAL TO POWER SUPPLY SOURCE

CP5

N

LAMINATION OF ALL THIN
LAYERS IS FINISHED?

Y

END

FIG.9

FIG.10

FIG.11A

FIG.11B

FIG.11C

FIG.12A

FIG.12B

FIG.12C

FIG.13A

EP 3 640 006 A1

- - - ▶  SWITCH FROM CONTROL BASED ON 1st TEMPERATURE SENSOR TO
        CONTROL BASED ON 2nd TEMPERATURE SENSOR

──────▶  SWITCH FROM CONTROL BASED ON 2nd TEMPERATURE SENSOR
        TO CONTROL BASED ON 1st TEMPERATURE SENSOR

NUMBER OF LAMINATED THIN
    LAYERS OF POWDER
        MATERIAL

1    5    10    15    20    25

TEMPERATURE (° C)

1st TARGET
TEMPERATURE
(T1tc)

START TEMPERATURE (° C)

START TEMPERATURE (° C)

START TEMPERATURE (° C)    2nd TARGET TEMPERATURE (T2tc)

TIME (t)

FIG.13B

PROCESSING OF SINGLE THIN LAYER

FIG.13C

TEMPERATURE MEASUREMENT REGION
FOR TEMPERATURE SENSOR
35a

LAMINATED BONDED LAYERS 29b
i-TH TO (i+2)-TH LAYERS

LASER BEAM
APPLICATION PATH

SET LASER BEAM
APPLICATION REGION

## FIG.14A

TEMPERATURE
MEASUREMENT REGION FOR
TEMPERATURE SENSOR
35a

LAMINATED BONDED LAYERS 29b
i-TH TO (i+2)-TH LAYERS

LASER BEAM
APPLICATION PATH

SET LASER BEAM
APPLICATION REGION

## FIG.14B

FIG.15A

FIG.15B

FIG.16

FIG.17A

FIG.17B

FIG.17C

## INTERNATIONAL SEARCH REPORT

International application No.

PCT/JP2017/022401

**A. CLASSIFICATION OF SUBJECT MATTER**
*B29C64/153*(2017.01)i, *B22F3/105*(2006.01)i

According to International Patent Classification (IPC) or to both national classification and IPC

**B. FIELDS SEARCHED**

Minimum documentation searched (classification system followed by classification symbols)
B29C64/153, B22F3/105

Documentation searched other than minimum documentation to the extent that such documents are included in the fields searched
Jitsuyo Shinan Koho          1922–1996   Jitsuyo Shinan Toroku Koho    1996–2017
Kokai Jitsuyo Shinan Koho    1971–2017   Toroku Jitsuyo Shinan Koho    1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2016/0199911 A1  (SIGMA LABS, INC.), 14 July 2016 (14.07.2016), a whole document & WO 2016/081651 A1 | 1-7 |
| A | US 2015/0321422 A1  (UNITED TECHNOLOGIES CORP.), 12 November 2015 (12.11.2015), a whole document & EP 2942132 A1 | 1-7 |
| A | JP 2009-220576 A  (EOS GmbH Electro Optical Systems), 01 October 2009 (01.10.2009), entire text; all drawings & US 2007/0196561 A1   & WO 2006/105827 A1 & DE 102005015870 B   & CN 1976800 A & BR PI0605633 A     & RU 2006147226 A | 1-7 |

☒  Further documents are listed in the continuation of Box C.          ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

Date of the actual completion of the international search
21 August 2017 (21.08.17)

Date of mailing of the international search report
29 August 2017 (29.08.17)

Name and mailing address of the ISA/
Japan Patent Office
3-4-3,Kasumigaseki,Chiyoda-ku,
Tokyo 100-8915,Japan

Authorized officer

Telephone No.

Form PCT/ISA/210 (second sheet) (January 2015)

**INTERNATIONAL SEARCH REPORT**

International application No.

PCT/JP2017/022401

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-053127 A  (3D Systems, Inc.),<br>23 February 2006 (23.02.2006),<br>entire text; all drawings<br>& US 6930278 B1          & EP 1634694 A2<br>& DE 102005026884 A      & AT 450360 T | 1-7 |
| A | JP 2008-037024 A  (Aspect Inc.),<br>21 February 2008 (21.02.2008),<br>entire text; all drawings<br>(Family: none) | 1-7 |
| A | JP 2015-101739 A  (Aspect Inc.),<br>04 June 2015 (04.06.2015),<br>entire text; all drawings<br>(Family: none) | 1-7 |
| A | JP 2017-013426 A  (Aspect Inc.),<br>19 January 2017 (19.01.2017),<br>entire text; all drawings<br>& US 2017/0001243 A1    & DE 102016110789 A | 1-7 |

Form PCT/ISA/210 (continuation of second sheet) (January 2015)

**EP 3 640 006 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017013426 A
- JP 2016107554 A
- JP 2008370024 A
- JP 2007223192 A